Europäisches Patentamt

European Patent Office

Office européen des brevets

(11) Veröffentlichungsnummer : **0 385 924 B1**

(12) # EUROPÄISCHE PATENTSCHRIFT

(45) Veröffentlichungstag der Patentschrift :
30.12.92 Patentblatt 92/53

(51) Int. Cl.⁵ : **B60J 1/00**

(21) Anmeldenummer : **90810082.9**

(22) Anmeldetag : **06.02.90**

(54) **Spaltdichtung für Scheiben und Fenster- oder Windschutzscheibenanordnung an einer Fahrzeugkarosserie.**

(30) Priorität : **25.02.89 DE 3905906**

(43) Veröffentlichungstag der Anmeldung :
**05.09.90 Patentblatt 90/36**

(45) Bekanntmachung des Hinweises auf die
Patenterteilung :
**30.12.92 Patentblatt 92/53**

(84) Benannte Vertragsstaaten :
**AT BE CH DE ES FR GB IT LI NL SE**

(56) Entgegenhaltungen :
**DE-A- 3 215 892**
**DE-A- 3 223 155**
**DE-A- 3 629 343**

(73) Patentinhaber : **Gurit-Essex AG**
**CH-8807 Freienbach (CH)**

(72) Erfinder : **Riederer, Rudolf,**
**Stommelnerweg 33,**
**W-5024 Pulheim (DE)**

(74) Vertreter : **Rottmann, Maximilian R.**
**c/o Rottmann, Zimmermann + Partner AG**
**Glattalstrasse 37**
**CH-8052 Zürich (CH)**

Jouve, 18, rue Saint-Denis, 75001 PARIS

**Beschreibung**

Die vorliegende Erfindung bezieht sich auf eine Spaltdichtung für Scheiben, insbesondere für Fahrzeugscheiben, die durch Kleben in einem Scheibenöffnungs-Rahmen zu befestigen sind, nach dem Oberbegriff des Patentanspruchs 1. Eine gattungsgemäß ausgebildete Spaltdichtung ist z.B. in Figur 4 der DE-A-3 223 155 dargestellt.

Gegenüber der konventionellen Verglasungstechnik, bei welcher ein Doppel-U-Profil aus Gummi oder einem ähnlich elastischen Material Verwendung findet, das einerseits die Scheibenkante und andererseits eine Rahmenkante, einen Flansch an einer Fahrzeugkarosserie oder dgl. formschlüssig umfasst und dabei die Scheibe in der vorgesehenen Montageposition hält, findet zunehmend die sogenannte Direktverglasung Anwendung, bei der die Scheibe in den Rahmen, an einen Flansch einer Karosserie oder dgl. geklebt wird.

Zur Verklebung der Glasscheiben wird vorzugsweise entlang des Randes der Scheibe eine Kleberaupe aus einer dauerelastischen Klebe- und Dichtungsmasse aufgetragen. Danach wird die so vorbereitete Scheibe in den Rahmen bzw. auf den Flansch aufgebracht und angedrückt. Ein Problem, das bei dieser Vorgehensweise auftritt, besteht darin, dass die Scheibe in gewissem Umfang Grössentoleranzen aufweist, so dass die Öffnung der Karosserie etwas grösser sein muss als die einzusetzende Scheibe.

Dabei entsteht zwischen Scheibenrand und Karosserie ein mehr oder weniger grosser Spalt, der nicht nur ästhetisch unbefriedigend wirkt, sondern auch das Eindringen und Festsetzen von Schmutz und Feuchtigkeit ermöglicht, sowie zu im Fahrgastraum warnehmbaren Windgeräuschen im Flanschbereich führen kann.

Im Stand der Technik hat man auf verschiedene Arten versucht, dafür Abhilfe zu schaffen.

So offenbart z.B. die DE-A-20 38 016 die Verwendung eines Randprofils, das entlang des Umfanges der Scheibe auf diese aufgesteckt werden muss und das einen Kanalteil umfasst, welcher den Rand der Glasscheibe umschliesst. Von der oberen Kante der Vorderwandung des Kanalteils erstreckt sich ein Frontstreifenteil, der die Vorderwandung überdeckt und breiter ist als die Tiefe der Vorderwandung, so dass seine freie Kante ausreichend vorspringt, um gegen den angrenzenden Karosserieteil aufliegen zu können, wenn die Glasscheiben- und Einfaßstreifenanordnung in die Scheibenöffnung eingebaut ist, wobei der Frontstreifenteil den Zwischenraum zwischen dem Rand der Glasscheibe und dem Rand des Flansches abschliesst bzw. überdeckt. Ein derartiges Randprofil ist verhältnismässig teuer und erfordert eine relativ umständliche Montage auf der Scheibe, ist also für die heutzutage übliche, automatische Vorbereitung der Scheiben für die Verklebung ungeeignet.

Eine andere Lösung ist in der EP-A1-0 073 350 offenbart. Dort ist ein auf dem Randbereich einer Glasscheibe angeordneter Profilrahmen vorgesehen, welcher im Querschnitt gesehen ausserhalb des Umfangs der Glasscheibe einen Abschnitt aufweist, der durch mechanische Krafteinwirkung gezielt plastisch verformbar ist. Damit soll eine anpassbare Scheiben-Profilrahmen-Anordnung geschaffen werden, die exakt in die Fensteröffnung passt. Nachteilig dabei ist, neben dem wiederum noch höheren Preis des Profilrahmens, dass ein arbeits- und zeitintensiver, zusätzlicher Arbeitsgang erforderlich ist, nämlich das plastische Deformieren des Profilrahmens, bevor die Scheibe in die Karosserie eingesetzt werden kann. Demzufolge ist der Ersatz von Scheiben im Reparaturfall sehr teuer.

In den Veröffentlichungen EP-A1-0 128 837, GB-A-2 049 010 und US-A-4,441,755 sind einander ähnliche Lösungen offenbart. In jedem Fall wird zur Abdeckung des Randspaltes ein Profilteil verwendet, welches einen Deckabschnitt zur Überbrückung des Spaltes und einen Verankerungsabschnitt aufweist, der in die Kleberaupe eingesteckt bzw. mit dieser verbunden ist. Auch diese Lösungen sind verhältnismässig teuer, stehen im Fall der GB- und US-Veröffentlichungen unerwünscht weit über die Glasoberfläche vor und erfordern eine umständliche Montage zum genau richtigen Zeitpunkt, wenn die Klebemasse noch plastisch, aber kurz vor dem Ausreagieren ist. Auch bei diesen Lösungen ist der Ersatz der Scheibe im Reparaturfall sehr teuer.

Aus der DE-A-32 23 155 ist eine Scheibeneinfassung bekannt geworden, welche einen schlauchförmigen Dichtungskörper aufweist. Bei dieser Lösung ist entweder ein kompliziert geformtes Profil erforderlich, um den Dichtungskörper am Scheibenrand zu befestigen, oder es ist ein separates, am Scheibenrand zu befestigendes Profilstück vonnöten, um den eigentlichen Dichtungskörper am vorgesehenen Platz zu halten. Im letzteren Fall erscheint auch die Montage der Scheibe unnötig kompliziert, da nicht ersichtlich ist, wie der schlauchartige Dichtungskörper vor der Montage der Scheibe an Ort und Stelle festgehalten werden soll.

Es ist die Aufgabe der Erfindung, die Nachteile des Standes der Technik zu vermeiden und eine Spaltdichtung für Scheiben, insbesondere für Fahrzeugscheiben, vorzuschlagen, welche wesentlich billiger ist als die herkömmlichen Profile, die zu diesem Zweck verwendet werden, welche sehr einfach anzubringen ist und welche einen nahezu bündigen sowie Staub- und Feuchtigkeitsdichten Abschluss der Scheibe mit der Karosserieoberfläche gewährleistet, selbst wenn Grössentoleranzen der Scheibe und/oder der Montageöffnung vorhanden sind.

Gemäss der Erfindung wird dies bei einer Spaltdichtung der im Oberbegriff des Patentanspruchs 1 genannten Art dadurch erreicht, dass der Hohlprofilkörper im Querschnittsumfang einen ersten Bereich mit grösserer Wandstärke und einen zweiten Bereich mit geringerer Wandstärke aufweist, welch letzterer am Scheibenrand anliegt, und dass der erst Bereich des Hohlprofilkörpers eine rahmenseitig offene, umlaufende Längsnut besitzt, in welcher ein Klebstoff zur Befestigung des Hohlprofilkörpers aufgenommen ist.

Bei höheren Anforderungen an die Ästhetik und die Dichtwirkung hat es sich als günstig erwiesen, wenn der Hohlprofilkörper im Querschnitt im wesentlichen oval ist.

Vorzugsweise erstrecken sich die genannten ersten und zweiten Bereiche je über etwa 50% des Querschnittsumfangs. Der genannte zweite Bereich des Hohlprofilkörpers, der die peripher offene, umlaufende Längsnut mit darin enthaltenem Klebstoff besitzt, liegt dabei an der der Scheibenöffnung abgewandten Randkante des Montageflansches auf. Dadurch kann die Spaltdichtung durch einfaches Andrücken am Montageflansch fixiert werden.

Zur leichteren Demontage der Scheibe im Reparaturfall kann im Inneren des Hohlprofilkörpers in an sich bekannter Weise ein Schneiddraht oder -faden angeordnet sein.

Als besonders günstig hat es sich erwiesen, wenn der Hohlprofilkörper aus Ethylen-Propylen-Dien-Elastomer (EPDM) besteht, der gegebenenfalls eingefärbt sein kann, um mit der Lackierung des Fahrzeugs zu harmonieren. Diese Materialien besitzen bekanntlich eine sehr gute UV-Beständigkeit.

Der Hohlprofilkörper ist vorzugsweise ein endloser Ring und kann zu einem geschlossenen Ring mit stumpfem Stoss zusammengeklebt sein, so dass keine sichtbare Stoßstelle vorhanden ist.

Im folgenden wird ein Ausführungsbeispiel des Erfindungsgegenstandes, unter Bezugnahme auf die beiliegenden Zeichnungen, näher erläutert. In den Zeichnungen zeigen:

Fig. 1 einen Teilschnitt durch einen Montageflansch einer Fahrzeugkarosserie und durch eine Scheibe, kurz vor dem Einbau der Scheibe; und

Fig. 2 einen Teilschnitt durch einen Montageflansch einer Fahrzeugkarosserie und durch eine Scheibe, nach dem Einbau der Scheibe.

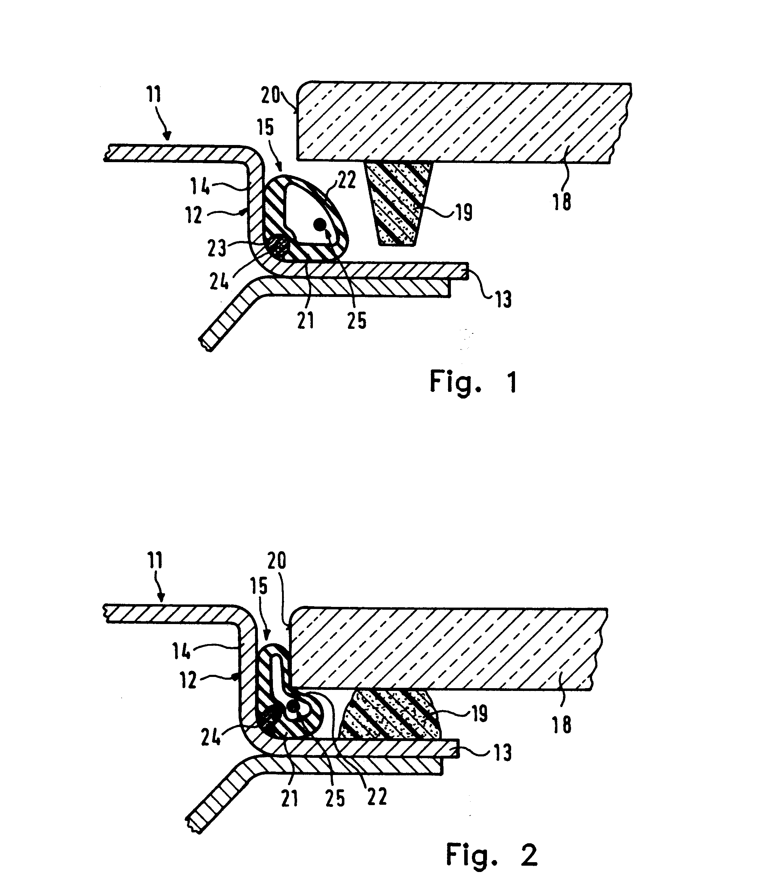

Ein Ausführungsbeispiel der erfindungsgemässen Spaltdichtung ist in den Fig. 1 und 2 dargestellt. Mit 11 ist generell eine Fahrzeugkarosserie bezeichnet, von der lediglich ein kleiner Teilschnitt im Bereich des Randes der die Scheibe aufnehmenden Öffnung gezeigt ist. Die Karosserie ist mit einem Montageflansch 12 versehen, welcher einen gegen das Fahrzeuginnere hin abgestuften Flanschteil 13 besitzt. In der Kante zwischen der Wand 14 und dem Flanschteil 13 des Flansches 12 ist eine Spaltdichtung 15 angeordnet. Die Spaltdichtung ist schlauchartig ausgebildet und besitzt im dargestellten Ausführungsbeispiel die Gestalt eines Hohlprofilkörpers mit im wesentlichen ovalem Querschnitt.

Der Hohlprofilkörper besteht aus elastischem Material, vorzugsweise aus einem Ethylen-Propylen-Dien-Elastomer (EPDM); dieses Material zeichnet sich bekanntlich durch eine gute UV-Beständigkeit aus. Es ist aber auch möglich, andere geeignete, elastische Materialien zu verwenden.

Mit 18 ist die am Montageflansch 12 zu befestigende Scheibe bezeichnet. In der Fig. 1 ist sie in einer Lage dargestellt, welche sie kurz vor dem Einsetzen in die Scheibenöffnung der Karosserie 11 einnimmt. Zur Befestigung der Scheibe 18 ist eine Kleberaupe 19 auf die Scheibe 18 aufgetragen, welche z.B. aus einem feuchtigkeitshärtenden, dauerelastischen Kleb- und Dichtungsmaterial bestehen kann. Geeignete Substanzen sind dem Fachmann bekannt und brauchen an dieser Stelle nicht erörtert zu werden. Es ist auch möglich, eine chemisch härtende, dauerelastische 2-Komponenten-Masse zu verwenden.

Wie aus Fig. 1 ersichtlich ist, ist die Kleberaupe 19 etwas im Abstand von der Kante 20 der Scheibe 18 angeordnet. Dadurch wird vermieden, dass das Klebe- und Dichtungsmaterial gegen die Spaltdichtung 15 gepresst wird, nachdem die Scheibe 18 eingebaut und angedrückt worden ist, und die Dichtung 15 verklebt bzw. in ihrer Elastizität beeinträchtigt.

Gemäss den Fig. 1 und 2 besitzt die Spaltdichtung 15 die Gestalt eines geschlossenen Hohlprofilkörpers mit im Querschnittsumfang ungleicher Wandstärke. So ist ein erster Wandbereich 21 mit grösserer Wandstärke und ein zweiter Wandbereich 22 mit geringerer Wandstärke vorgesehen. Der erste Bereich 21 ist mit einer peripher offenen, um das schlauchartige Hohlprofil umlaufenden Nut 23 ausgestattet, welche zur Aufnahme eines Kleberstranges 24 dient. Letzterer kann zum Beispiel ein Butyl-Kleber sein. Im Inneren des Hohlprofilkörpers 15 kann in bekannter Weise ein Schneiddraht oder -faden angeordnet sein, der im Reparaturfall das Auftrennen der Spaltdichtung und den Zugang zur Kleberaupe 19 erleichtert.

In der Fig. 2 ist die Scheibe 18 in eingebautem Zustand dargestellt. Es ist deutlich zu sehen, wie einerseits die Kleberaupe 19 plastisch deformiert worden ist, und wie andererseits die Spaltdichtung gegen die Kante 20 der Scheibe 18 anliegt, im Gegensatz zur Kleberaupe 19 aber unter elastischer Deformation. Vor dem Einbau der Scheibe 18 wurde der Hohlprofilkörper 15 in die Kante zwischen Wand 14 und Montageflansch 13 eingedrückt, so dass der Kleberstrang 24 aus der Nut 23 austritt und den ersten, dickeren Wandbereich 21 des Hohlprofilkörpers 15 an der Wand 14 und dem Montageflansch 13 fixiert.

Der dünnere Wandbereich 22 lässt sich leicht elastisch deformieren und schmiegt sich bei eingebauter Scheibe 18 dichtend an den Scheibenrand 20 an.

Damit ist die Scheibe 18 fest am Montageflansch 23 der Karosserie 11 befestigt und der Spalt zwischen Scheibenkante 20 und Wand 14, der je nach Grössentoleranzen der Scheibe 18 und/oder der Scheibenöffnung in der Karosserie 11 grösser oder kleiner sein kann, ist wirkungsvoll abgedichtet, so dass kaum Staub und Feuchtigkeit eindringen kann. Fahrtwindgeräusche durch Turbulenzen im Spaltbereich (Pfeif-Effekt) werden vollständig ausgeschaltet.

Der Hohlprofilkörper 15 ist ein stumpf zusammengeklebter, endloser Ring, so dass keine Stoßstelle sichtbar wird. Der gegebenenfalls eingelegte Schneiddraht kann mit den Enden verschweisst oder sonstwie mechanisch verbunden sein. Damit wird ermöglicht, dass im Reparaturfall der Schneiddraht mittels eines zugespitzten, hakenartigen Werkzeuges erfasst und aus dem Inneren des Hohlprofilkörpers 15 herausgezogen werden kann. Dabei wird das hakenartige Werkzeug von der Scheibeninnenseite her durch den Hohlprofilkörper 15 durchgestossen, bis der Haken den Schneiddraht gefasst hat, und der Draht wird aus dem Hohlprofilkörper herausgezogen. Anschliessend kann er durch ein Ziehwerkzeug erfasst und vollständig herausgezogen werden, wobei der Hohlprofilkörper 15 zerschnitten wird, so dass die Scheibe leichter ausgebaut werden kann.

Das Hohlkörper-Profil der Spaltdichtung wirkt optisch sehr flach bei eingebauter Scheibe; je nach Grösse der Scheibe 18 beträgt die Spalttiefe nur ca. 1-2 mm, was nicht nur der Ästhetik, sondern auch der Aerodynamik und der Geräuschminderung zugute kommt. Für besondere Anwendungsfälle kann der Hohlprofilkörper auch mit Radien und/oder Gehrungen hergestellt werden.

Die erfindungsgemäss Spaltdichtung ist für alle Arten von festen Fahrzeugscheiben wie Windschutzscheibe, Heckscheibe, feststehende Seitenscheiben usw. verwendbar und ist in der Herstellung erheblich billiger als bekannte Abdichtprofile.

Dadurch, dass der Hohlprofilkörper 15 keine Verbindung zur Scheibe hat, da das Glas von oben her aufliegt, ist die vorgeschlagene Anordnung für die automatische Montage von Scheiben sehr geeignet. Insbesondere ist das Einbringen der Spaltdichtung in die Fensteröffnung durch einen Automaten ermöglicht.

Das Material des Hohlprofilkörpers 15 kann eingefärbt werden, damit es z.B. mit der Lackierung des Fahrzeugs harmoniert. Ein weiterer Vorteil ist darin zu sehen, dass der Hohlprofilkörper 15 auch bei eingesetzter Scheibe niedergedrückt und damit weiter elastisch deformiert werden kann, wenn zum Beispiel bei Undichtigkeiten der eingebauten Scheibe 18 nachträglich noch Dichtungsmasse in den Raum zwischen Kleberaupe 19 und Hohlprofilkörper 15 eingebracht werden muss.

**Patentansprüche**

1. Spaltdichtung (15) für Scheiben (18), insbesondere für Fahrzeugscheiben, die durch Kleben in einem Scheibenöffnungs-Rahmen zu befestigen sind, welche durch einen längenmässig im wesentlichen dem Umfang der einzuklebenden Scheibe (18) entsprechenden, an einem Montageflansch (12) des Rahmens befestigten, elastisch verformbaren, allseitig geschlossenen Hohlprofilkörper (15) gebildet ist, dadurch gekennzeichnet, dass der Hohlprofilkörper (15) im Querschnittsumfang einen ersten Bereich (21) mit grösserer Wandstärke und einen zweiten Bereich (22) mit geringerer Wandstärke aufweist, welch letzterer am Scheibenrand anliegt, und dass der erste Bereich (21) des Hohlprofilkörpers (15) eine rahmenseitig offene, umlaufende Längsnut (23) besitzt, in welcher ein Klebstoff (24) zur Befestigung des Hohlprofilkörpers (15) aufgenommen ist.

2. Spaltdichtung nach Anspruch 1, dadurch gekennzeicht, dass der Hohlprofilkörper (15) im querschnitt im wesentlichen oval ist.

3. Spaltdichtung nach Anspruch 1, dadurch gekennzeichnet, dass sich der genannte erste und zweite Bereich (21, 22) je über etwa 50% des Querschnittsumfangs erstrecken.

4. Spaltdichtung nach einem der vorhergehenden Ansprüche, dadurch gekennzeichnet, dass im Inneren des Hohlprofilkörpers (15) ein Schneiddraht oder -faden (25) angeordnet ist.

5. Spaltdichtung nach einem der vorhergehenden Ansprüche, dadurch gekennzeichnet, dass der Hohlprofilkörper (15) aus Ethylen-Propylen-Dien-Elastomer (EPDM) besteht.

6. Spaltdichtung nach einem der vorhergehenden Ansprüche, dadurch gekennzeichnet, dass der Hohlprofilkörper (15) farbig ist.

7. Spaltdichtung nach einem der vorhergehenden Ansprüche, dadurch gekennzeichnet, dass der Hohlprofilkörper (15) ein endloser Ring ist.

8. Spaltdichtung nach Anspruch 7, dadurch gekennzeichnet, dass der Hohlprofilkörper (15) zu einem geschlossenen Ring mit stumpfem Stoss zusammengeklebt ist.

**Claims**

1. Gap seal (15) for panes (18), in particular vehicle panes fixed by adhesion into the pane aperture frame, which is formed by an elastically deformable hollow profile body (15) sealed on all sides, attached to a mounting flange (12) of the frame and corresponding essentially in its longitudinal dimension to the periphery of the pane to be affixed (18), characterized in that the hollow profile body (15) in its cross-sectional periphery has a first area (21) with greater wall thickness and a second area (22) with smaller wall thickness, where the latter lies against the pane edge, and in that the first area (21) of the hollow profile body (15) has a peripheral longitudinal groove (23) open on the frame side in which is placed an adhesive (24) to affix the hollow profile body (15).

2. Gap seal in accordance with Claim 1, characterized in that the hollow profile body (15) is essentially oval in cross-section.

3. Gap seal in accordance with Claim 1, characterized in that the said first and second areas (21, 22) each extend over around 50% of the cross-sectional periphery.

4. Gap seal in accordance with one of the above Claims, characterized in that inside the hollow profile body (15) is arranged a cutting wire or thread (25).

5. Gap seal in accordance with one of the above Claims, characterized in that the hollow profile body (15) consists of ethylene-propylene-diene elastomer (EPDM).

6. Gap seal in accordance with one of the above Claims, characterized in that the hollow profile body (15) is coloured.

7. Gap seal in accordance with one of the above Claims, characterized in that the hollow profile body (15) is an endless ring.

8. Gap seal in accordance with Claim 7, characterized in that the hollow profile body (15) is glued together with a butt joint to form a closed ring.

**Revendications**

1. Joint d'étanchéité (15) pour vitres (18), en particulier pour vitres d'automobile, fixées par collage dans le chassis d'une ouverture pour vitre, qui consiste en un corps profilé creux (15) entièrement fermé, élastiquement déformable, fixé à un rebord de montage (12) du chassis, correspondant longitudinalement sensiblement au pourtour de la vitre (18) à coller, caractérisé en ce que le corps profilé creux (15) présente, sur le pourtour de sa section une première zone (21) à paroi large et une seconde zone (22) à paroi mince, laquelle s'étend sur le bord de la vitre, et en ce que la première zone (21) du corps profilé creux (15) présente une rainure longitudinale (23) ouverte du côté du chassis, dans laquelle est reçue une matière de collage (24) afin de fixer le corps profilé creux (15).

2. Joint d'étanchéité selon la revendication 1, caractérisé en ce que le corps profilé creux (15) est de section sensiblement ovale.

3. Joint d'étanchéité selon la revendication 1, caractérisé en ce que lesdites première et seconde zones (21,22) s'étendent chacune sur environ 50 % du pourtour de la section.

4. Joint d'étanchéité selon les revendications précédentes, caractérisé en ce qu'un fil ou une fibre (25) de découpage est disposé à l'intérieur du corps profilé creux.

5. Joint d'étanchéité selon les revendications précédentes, caractérisé en ce que le corps profilé creux (15) est en élastomère éthylène-propylène-diène (EPDM).

6. Joint d'étanchéité selon les revendications précédentes, caractérisé en ce que le corps profilé creux (15) est coloré.

7. Joint d'étanchéité selon les revendications précédentes, caractérisé en ce que le corps profilé creux (15) est un anneau fermé.

8. Joint d'étanchéité selon la revendication 7, caractérisé en ce que le corps profilé creux (15) est contrecollé à un anneau ouvert avec un joint bout-à-bout.

Fig. 1

Fig. 2